# EUROPÄISCHE PATENTSCHRIFT

(11) **EP 1 584 902 B1**
(45) Veröffentlichungstag und Bekanntmachung des Hinweises auf die Patenterteilung: **07.12.2011**
(21) Anmeldenummer: 05003169.9
(22) Anmeldetag: 15.02.2005
(51) Int. Cl.: G01F 1/60

(54) **Magnetisch-induktives Durchflussmessgerät und Verfahren zum Betreiben eines magnetisch-induktiven Durchflussmessgeräts**
Electromagnetic flowmeter and method for operating an electromagnetic flowmeter
Débitmètre électromagnétique et procédé de fontionnement d'un débitmètre électromagnétique

(30) Priorität: 08.04.2004 DE 102004018078
(43) Veröffentlichungstag der Anmeldung: 12.10.2005
(73) Patentinhaber: KROHNE MESSTECHNIK GMBH & CO. KG, 47058 Duisburg (DE)
(72) Erfinder: Florin, Wilhelm, 47198 Duisburg (DE)
(74) Vertreter: Gesthuysen, von Rohr & Eggert

(56) Entgegenhaltungen:
- EP-A- 0 416 866
- DE-C1- 3 303 017
- US-A- 4 010 644
- US-A- 5 370 000

## Beschreibung

Die Erfindung betrifft ein magnetisch-induktives Durchflußmeßgerät, zur Messung des Volumendurchflusses eines durch ein Meßrohr strömenden Mediums, mit einem Magneten zur Erzeugung eines das Meßrohr durchsetzenden Magnetfelds mit einer senkrecht zur Strömungsrichtung verlaufenden Magnetfeldkomponente, einer ersten Elektrode und einer zweiten Elektrode zum Abgreifen einer in dem Medium induzierten Spannung und einem Verstärker, dem die mittels der Elektroden abgegriffene Spannung zugeführt wird, mit einer Testspannungseinrichtung und einer Vergleichseinrichtung, wobei von der Testspannungseinrichtung eine Testspannung erzeugt wird, die Testspannungseinrichtung mit dem Verstärker derart verbunden ist, daß die Testspannung dem Verstärker zugeführt und dabei der mittels der Elektroden abgegriffenen Spannung überlagert werden kann, die Vergleichseinrichtung mit dem Verstärker verbunden ist, so daß die von dem Verstärker ausgegebene Spannung der Vergleichseinrichtung zugeführt werden kann, und die Vergleichseinrichtung derart ausgebildet ist, daß ein Vergleich der von dem Verstärker ausgegebenen Spannung mit einem Referenzwert erfolgen kann, Die Erfindung betrifft ferner ein Verfahren zum Betreiben eines magnetisch-induktiven Durchflußmeßgeräts, zur Messung des Volumendurchflusses eines durch ein Meßrohr strömenden Mediums, wobei das magnetisch-induktive Durchflußmeßgerät einen Magneten, eine erste Elektrode, eine zweite Elektrode und einen Verstärker aufweist, mit dem Magneten ein das Meßrohr durchsetzendes Magnetfeld mit einer senkrecht zur Strömungsrichtung verlaufenden Magnetfeldkomponente erzeugt wird, mit der ersten Elektrode und der zweiten Elektrode eine in dem Medium induzierte Spannung abgegriffen wird und dem Verstärker die mittels der Elektroden abgegriffene Spannung zugeführt wird, eine Testspannung erzeugt und dem Verstärker derart zugeführt wird, daß die Testspannung der mittels der Elektroden abgegriffenen Spannung überlagert werden kann, und die von dem Verstärker ausgegebene Spannung erfaßt und mit einem Referenzwert verglichen wird.

Magnetisch-induktive Durchflußmeßgeräte und Verfahren zum Betreiben magnetisch-induktiver Durchflußineßgeräte der eingangs genannten Art sind schon seit längerer Zeit gut bekannt und werden in vielfältigen unterschiedlichen Einsatzgebieten verwendet. Das grundlegende Prinzip eines magnetisch-induktiven Durchflußmeßgeräts zur Messung des Volumendurchflusses eines durch ein Meßrohr strömenden Mediums geht dabei zurück auf Faraday, der im Jahre 1832 vorgeschlagen hat, das Prinzip der elektrodynamischen Induktion zur Strömungsgeschwindigkeitsmessung anzuwenden.

Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld erzeugt, das eine Magnetfeldkomponente senkrecht zur Strömungsrichtung in dem Meßrohr enthält. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu der über die Elektroden abgreifbaren Spannung.

Die Elektroden werden bei den bekannten magnetisch-induktiven Durchflußmeßgeräten entweder derart ausgeführt, daß sie galvanisch mit dem strömenden Medium gekoppelt sind, oder derart, daß sie kapazitiv mit dem strömenden Medium gekoppelt sind. Ein besonderes Merkmal der magnetisch-induktiven Durchflußmeßgeräte ist weiterhin, daß die Meßspannung proportional ist zu der über den Querschnitt des Meßrohrs gemittelten Strömungsgeschwindigkeit des Mediums. Das heißt, daß zwischen Meßspannung und Volumenstrom Proportionalität vorliegt.

Im eigentlichen Durchflußmeßbetrieb wird bei einem magnetisch-induktiven Durchflußmeßgerät im allgemeinen das Magnetfeld zeitlich alternierend umgeschaltet. Aus dem Stand der Technik sind dazu unterschiedliche Vorgehensweisen bekannt. Eine magnetisch-induktive Durchflußmessung ist z. B. mit einem Wechselfeld möglich, wobei typischerweise eine Speisung der Magnetspulen des Magneten direkt vom Stromnetz mit einer sinusförmigen 50-Hz-Wechselspannung erfolgt. Die aufgrund der Strömung erzeugte Spannung zwischen den Meßelektroden wird dabei jedoch leicht durch transformatorische Störspannungen und Netzstörspannungen gestört.

In letzter Zeit ist bei magnetisch-induktiven Durchflußmeßgeräten im allgemeinen mit einem geschalteten Gleichfeld gearbeitet worden. Ein solches geschaltetes Gleichfeld wird dadurch erhalten, daß den Magnetspulen des Magneten ein Strom mit zeitlich im wesentlichen rechteckförmigem Verlauf zugeführt wird, der seine Polarität zeitlich alternierend ändert. Möglich ist jedoch auch die Verwendung eines pulsierenden Gleichfelds, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird, also ein periodisch alternierendes Magnetfeld erzeugt wird, ist jedoch vorzuziehen, da durch die Änderung der Polarität des Magnetfelds Störgrößen, wie elektrochemische Störgrößen, unterdrückt werden.

Die zum Durchfluß proportionale Spannung zwischen den Meßelektroden ist im allgemeinen sehr klein, liegt im allgemeinen nämlich im Mikrovolt-Bereich. Diese Spannung wird mit möglichst hoher Auflösung (ca. 100 mV) gemessen, wobei die Meßfrequenz bei typischen magnetisch-induktiven Durchflußmeßgeräten, die nach dem Prinzip des geschalteten Gleichfelds arbeiten, im Bereich von 1 bis 100 Hz liegt.

Die an den Elektroden abgegriffene Spannung wird bei den bekannten magnetisch-induktiven Durchflußmeßgeräten im allgemeinen einem Verstärker zugeführt, bevor das verstärkte, dem Durchfluß proportionale Spannungssignal weiterverarbeitet wird. Als Verstärker dafür werden häufig Differenzverstärker verwendet. Eine Auswertung des verstärkten Spannungssignals erfolgt weiterhin typischerweise in einem Mikroprozessor, so daß es vor der Zuführung des Spannungssignals zu dem Mikroprozessor einer Analog-Digital-Wandlung mittels eine Analog-Digital-Wandlers bedarf.

Für die Eichfähigkeit und Kalibrierung eines magnetisch-induktiven Durchflußmeßgeräts der vorgenannten Art ist es wesentlich, daß der Verstärkungspfad, also der Weg des Spannungssignals über den Verstärker zur Auswertung, verläßlich arbeitet bzw. zumindest ein Abweichen von dem kalibrierten Betrieb, der eine Neukalibrierung erforderlich macht, dem Benutzer des magnetisch-induktiven Durchflußmeßgeräts angegeben wird.

Aus der deutschen Patentschrift DE 33 03 017 C1 ist eine Schaltung zur Selbstüberwachung eines Meßwertumformers für magnetisch-induktive Durchflußmeßgeräte bekannt, bei der Veränderungen im Verstärkungspfad - also in dem Pfad zwischen den Elektroden des magnetisch-induktiven Durchflußmeßgeräts und einer Ausrwerteschaltung - dadurch entdeckt werden, daß der Verstärkungspfad, bestehend aus Eingangsverstärker und Kompensationsverstärker, zweifach, in paralleler Anordnung realisiert ist und Abweichungen zwischen den parallelen Verstärkungspfaden ermittelt werden. Nachteilig an dieser Lösung der Selbstüberwachung des Verstärkungspfades ist, daß ein erheblicher schaltungstechnischer Aufwand betrieben werden muß, da der Verstärkungspfad doppelt vorzusehen ist, zum einen zur tatsächlichen Signalführung und zum anderen zur Bereitstellung eines Vergleichsignals, wobei jedoch gerade solche Fehler nicht erkannt werden, die sich gleichzeitig in beiden Pfaden einstellen, beispielsweise durch Alterung von Bauelementen.

Die DE 33 03 017 C1 offenbart ferner als Stand der Technik magnetisch-induktive Durchflußmeßgeräte mit einem einkanaligen Aufbau - also mit einem einzigen Verstärkungspfad -, wobei in den Eingangsverstärker wechselweise mit dem Meßsignal ein Testsignal eingespeist wird, das am Ausgang des Meßwertumformers mit einem Sollwert verglichen wird. Diese Methode der Selbstüberwachung hat jedoch den systembedingten Nachteil einer Totzeit, wobei insbesondere auch nachteilig ist, daß das Ab- und Zuschalten des über die Elektroden des magnetisch-induktiven Durchflußmessers erfaßten Meßsignals schaltungstechnisch aufwendig ist und nicht mit hohen Frequenzen erfolgen kann, da andernfalls die Genauigkeit bei der Übertragung des Meßsignals in Folge von transienten Signalübertragungseffekten gefährdet ist.

Es ist daher die Aufgabe der Erfindung, ein derartiges magnetisch-induktives Durchflußmeßgerät sowie ein derartiges Verfahren zum Betreiben eines magnetisch-induktiven Durchflußgeräts anzugeben, mit denen auf einfache Weise Eichfähigkeit erzielt wird und bei denen im Betrieb des magnetisch-induktiven Durchflußmeßgeräts ein Abweichen vom kalibrierten Betrieb, insbesondere verursacht durch Probleme im Verstärkungspfad, erfaßt und angegeben werden können unter Vermeidung der aus dem Stand der Technik bekannten Nachteile.

Ausgehend von dem eingangs beschriebenen magnetisch-induktiven Durchflußmeßgerät ist die zuvor hergeleitete und aufgezeigte Aufgabe dadurch gelöst, daßdie Testspannung während des Meßbetriebs erzeugt und dem Verstärker temporär, vorzugsweise periodisch unterbrochen, zugeführt wird, so daß die Testspannung der mittels der Elektroden abgegriffenen Spannung überlagert wird und als ein erster Spannungswert die von dem Verstärker ausgegebene Spannung erfaßt wird, wenn dem Verstärker keine Testspannung zugeführt wird, als ein zweiter Spannungswert die von dem Verstärker ausgegebene Spannung erfaßt wird, wenn dem Verstärker die Testspannung zugeführt wird, von dem zweiten Spannungswert ein vorbestimmter Spannungsbetrag subtrahiert wird und der damit erhaltene Spannungswert als Referenzwert verwendet wird, mit dem der erste Spannungswert verglichen wird.

Gemäß einer bevorzugten Weiterbildung der Erfindung ist eine Warneinrichtung vorgesehen, von der ein Warnsignal ausgegeben wird, wenn die von dem Verstärker ausgegebene Spannung von dem Referenzwert um mehr als einen vorbestimmten Betrag abweicht. Dies kann für den Benutzer des magnetisch-induktiven Durchflußmeßgeräts ein Hinweis sein, daß eine Neukalibrierung des Geräts erforderlich ist.

Wie weiter oben schon ausgeführt, kann eine Auswertung oder/und Weiterverarbeitung des dem Durchfluß proportionalen Spannungssignals in einem Mikroprozessor vorgesehen sein. Insbesondere in diesem Fall ist gemäß einer bevorzugten Weiterbildung der Erfindung vorgesehen, daß dem Verstärker ein Analog/Digital-Wandler nachgeschaltet ist. Dabei ist weiterhin vorzugsweise vorgesehen, daß für die Testspannungseinrichtung einerseits und den Analog/DigitalWandler und/oder den Verstärker andererseits voneinander verschiedene und voneinander unabhängige Spannungsquellen vorgesehen sind. Dadurch daß die Spannungsquelle zur Versorgung der Testspannungseinrichtung von der Spannungsquelle für den Analog/Digital-Wandler bzw. den Verstärker verschieden ist, können auch solche Veränderungen des Betriebs des magnetisch-induktiven Durchflußmeßgeräts erfaßt werden, die von einer Spannungsquelle des Analog/Digital-Wandlers bzw. des Verstärker herrühren und eine Neukalibrierung des Geräts erforderlich machen.

Ausgehend von dem eingangs beschriebenen Verfahren zum Betreiben eines magnetisch-induktiven Durchflußmeßgeräts ist das erfindungsgemäße Verfahren, mit dem die weiter oben hergeleitete und aufgezeigte Aufgabe gelöst ist, dadurch gekennzeichnet, daß die Testspannung während des Meßbetriebs erzeugt und dem Verstärker temporär, vorzugsweise periodisch unterbrochen, zugeführt wird, so daß die Testspannung der mittels der Elektroden abgegriffenen Spannung überlagert wird und als ein erster Spannungswert die von dem Verstärker ausgegebene Spannung erfaßt wird, wenn dem Verstärker keine Testspannung zugeführt wird, als ein zweiter Spannungswert die von dem Verstärker ausgegebene Spannung erfaßt wird, wenn dem Verstärker die Testspannung zugeführt wird, von dem zweiten Spannungswert ein vorbestimmter Spannungsbetrag subtrahiert wird und der damit erhaltene Spannungswert als Referenzwert verwendet wird, mit dem der erste Spannungswert verglichen wird.

Entsprechend der zuvor schon beschriebenen bevorzugten Weiterbildung des erfindungsgemäßen magnetisch-induktiven Durchflußmeßgeräts ist gemäß einer bevorzugten Weiterbildung des erfindungsgemäßen Verfahrens vorgesehen, daß ein Warnsignal ausgegeben wird, wenn die von dem Verstärker ausgegebene Spannung von dem Referenzwert um mehr als einen vorbestimmten Betrag abweicht.

Wie weiter oben schon ausgeführt, ist auch bei dem erfindungsgemäßen Verfahren gemäß einer bevorzugten Weiterbildung der Erfindung vorgesehen, daß die von dem Verstärker ausgegebene Spannung vor dem Vergleich mit dem Referenzwert mittels eines Analog/Digital-Wandlers digitalisiert wird. In diesem Zusammenhang ist gemäß einer bevorzugten Weiterbildung der Erfindung ferner vorgesehen, daß die Testspannung unabhängig von der Versorgungsspannung für den Analog/Digital-Wandler und/oder der Versorgungsspannung für den Verstärker erzeugt wird, um die ebenfalls oben angegebenen Vorteile zu erzielen. Im einzelnen gibt es nun eine Vielzahl von Möglichkeiten, das erfindungsgemäße magnetisch-induktive Durchflußmeßgerät sowie das erfindungsgemäß Verfahren zum Betreiben eines magnetisch-induktiven Durchflußmeßgeräts auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: schematisch ein magnetisch-induktives Durchflußmeßgerät gemäß einem bevorzugten Ausführungsbeispiel der Erfindung und
- Fig. 2: die Verstärkungsschaltung des magnetisch-induktiven Durchfluß- meßgeräts gemäß dem bevorzugten Ausführungsbeispiel der Erfin- dung im Detail.

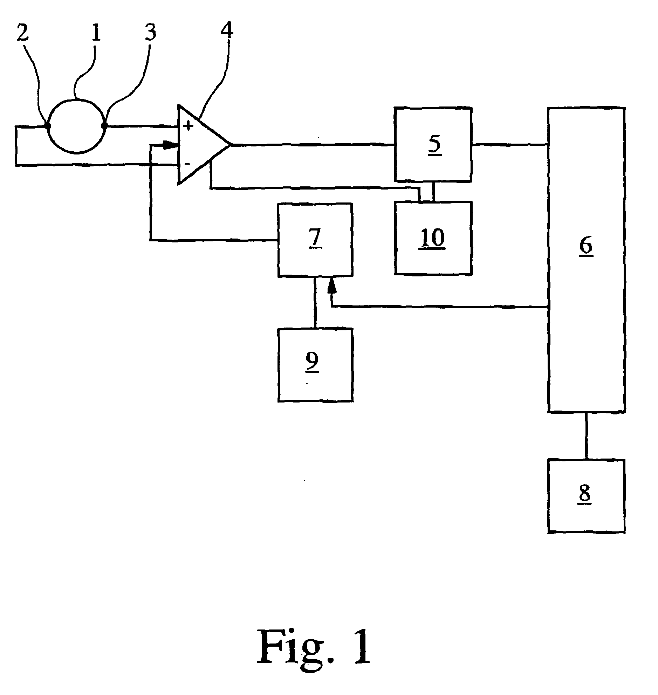

Fig. 1 zeigt schematisch ein magnetisch-induktives Durchflußmeßgerät zur Messung des Volumendurchflusses eines durch ein Meßrohr 1 strömenden Mediums. Zur Erzeugung eines das Meßrohr 1 durchsetzenden Magnetfelds mit einer senkrecht zur Strömungsrichtung verlaufenden Magnetfeldkomponente ist ein nicht weiter dargestellter Magnet vorgesehen. Die aufgrund des Magnetfelds in dem strömenden Medium induzierte Spannung wird mittels einer ersten Elektrode 2 und einer zweiten Elektrode 3 abgegriffen. Die mittels der Elektroden 2, 3 abgegriffene Spannung wird dann einem Verstärker 4 zugeführt. Dem Verstärker 4 ist ein Analog/Digital-Wandler 5 nachgeschaltet, der seinerseits auf eine als Mikroprozessor ausgebildete Vergleichseinrichtung 6 führt, die auch zur Auswertung des Meßsignals dient. Das magnetischinduküve Durchflußmeßgerät gemäß dem bevorzugten Ausführungsbeispiel der Erfindung arbeitet mit einem geschalteten Gleichfeld. Das heißt, daß den Magnetspulen des Magneten ein Strom mit zeitlich im wesentlichen rechteckförmigem Verlauf zugeführt wird, der seine Polarität zeitlich alternierend ändert.

Zusätzlich zu dem zuvor beschriebenen Aufbau des magnetisch-induktiven Durchflußmeßgeräts gemäß dem bevorzugten Ausführungsbeispiel der Erfindung, mit dem das magnetisch-induktive Durchflußmeßgerät schon betrieben werden kann, ist nun eine Testspannungseinrichtung 7 vorgesehen. Von der Testspannungseinrichtung 7 wird unter Ansteuerung von der als Mikroprozessor ausgebildeten Vergleichseinrichtung 6 eine Testspannung erzeugt, die dem Verstärker 4 zugeführt wird. Die Erzeugung und Zuführung der Testspannung erfolgt periodisch unterbrochen, so daß von dem Verstärker 4 periodisch einerseits ein Signal ausgegeben wird, daß rein dem verstärkten Meßsignal, also der mittels der Elektroden 2, 3 abgegriffenen Spannung, entspricht, und andererseits ein Signal, bei dem dem Meßsignal die Testspannung überlagert ist. Nach der Digitalisierung mit Hilfe des Analog/Digital-Wandlers werden diese Signale in der Vergleichseinrichtung 6 weiterbehandelt.

Die Vergleichseinrichtung 6 subtrahiert von dem Signal, das sich aus dem Meßsignal und der verstärkten Testspannung zusammensetzt, einen vorbestimmten Betrag, der gerade der erwarteten verstärkten Testspannung entspricht, so daß über einen Vergleich dieser durch Subtraktion erhaltenen Spannung mit dem reinen verstärkten Meßsignal auf einen korrekten Betrieb des magnetisch-induktiven Durchflußmeßgeräts gemäß dem bevorzugten Ausführungsbeispiel der Erfindung geschlossen werden kann. Solange die beiden Werte nämlich um maximal einen vorbestimmten Betrag voneinander abweichen, kann von einem kalibrierten Betrieb des magnetisch-induktiven Durchflußmeßgeräts ausgegangen werden. Kommt es jedoch zu einer Abweichung um mehr als diesen vorbestimmten Betrag, so wird über eine mit der Vergleichseinrichtung 6 verbundene Warneinrichtung 8 ein Warnsignal ausgegeben, das dem Benutzer des magnetisch-induktiven Durchflußmeßgeräts mitteilt, daß kein kalibrierter Betrieb mehr vorliegt.

Vorzugsweise wird die Testspannung dem Verstärker 4 immer für jeweils eine halbe Periode oder wenige Perioden des Magnetfelds zugeführt. Dabei liegt die Testspannung in der Größenordnung der von den Elektroden 2, 3 abgegriffenen Spannung, also im Mikrovolt-Bereich. Grundsätzlich könnten zwei von dem Verstärker 4 ausgegebene Spannungswerte mit bzw. ohne überlagerter Testspannung direkt miteinander verglichen werden. Vorzugsweise ist jedoch vorgesehen, daß die jeweils erfaßten Signale in der Vergleichseinrichtung 6 gemittelt werden und ein Vergleich der gemittelten Werte erfolgt.

Aus Fig. 1 ist ersichtlich, daß für die Testspannungseinrichtung 7 einerseits und den Verstärker 4 sowie den Analog/Digital-Wandler 5 andererseits voneinander verschiedene und voneinander unabhängige Spannungsquellen 9, 10 vorgesehen sind. Auf diese Weise können verläßlich auch solche Abweichungen von einem kalibrierten Betrieb erfaßt werden, die auf die Spannungsversorgung des Verstärkers oder/und des Analog/Digital-Wandlers 5 zurückzuführen sind.

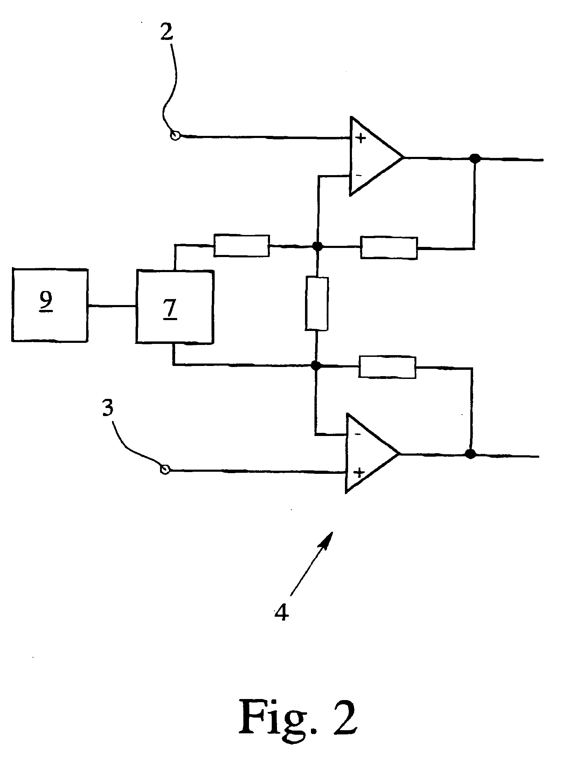

Aus Fig. 2 ist nun ein Detail einer möglichen Ausführungsform des in Fig. 1 lediglich schematisch dargestellten Verstärkers 4 gezeigt. Aus der dort gezeigten Anordnung ist erkennbar, daß bei aktivierter Testspannungseinrichtung 7, also der Erzeugung einer Testspannung, diese dem Verstärker 4 derart zugeführt wird, daß die Testspannung der von den Elektroden 2, 3 abgegriffenen Spannung überlagert wird. Im deaktivierten Zustand der Testspannungseinrichtung 7 wird hingegen lediglich das Meßsignal, also rein das zwischen den Elektroden 2, 3 abgegriffene Spannungssignal verstärkt und ausgegeben. Dabei dient die Spannungsquelle 9 der Testspannungseinrichtung 7 ausschließlich der Versorgung der Testspannungseinrichtung 7 und ist insbesondere unabhängig von anderen Spannungsquellen, die Einrichtungen des Verstärkungspfades versorgen.

## Patentansprüche

1. Magnetisch-induktives Durchflußmeßgerät, zur Messung des Volumendurchflusses eines durch ein Meßrohr (1) strömenden Mediums, mit einem Magneten zur Erzeugung eines das Meßrohr (1) durchsetzenden Magnetfelds mit einer senkrecht zur Strömungsrichtung verlaufenden Magnetfeldkomponente, einer ersten Elektrode (2) und einer zweiten Elektrode (3) zum Abgreifen einer in dem Medium induzierten Spannung und einem Verstärker (4), dem die mittels der Elektroden (2, 3) abgegriffene Spannung zuführbar ist, mit einer Testspannungseinrichtung (7) und einer Vergleichseinrichtung (6), wobei von der Testspannungseinrichtung (7) eine Testspannung erzeugbar ist, die Testspannungseinrichtung (7) mit dem Verstärker (4) derart verbunden ist, daß die Testspannung dem Verstärker (4) zugeführt und dabei der mittels der Elektroden (2, 3) abgegriffenen Spannung überlagert werden kann, die Vergleichseinrichtung (6) mit dem Verstärker (4) verbunden ist, so daß die von dem Verstärker (4) ausgegebene Spannung der Vergleichseinrichtung (6) zugeführt werden kann, und die Vergleichseinrichtung (6) derart ausgebildet ist, daß ein Vergleich der von dem Verstärker (4) ausgegebenen Spannung mit einem Referenzwert erfolgen kann,
**dadurch gekennzeichnet, daß** das Durchflußmeßgerät dazu ausgestaltet ist,
daß die Testspannung während des Meßbetriebs erzeugt und dem Verstärker (4) temporär, vorzugsweise periodisch unterbrochen, zugeführt wird, so daß die Testspannung der mittels der Elektroden (2, 3) abgegriffenen Spannung überlagert wird und als ein erster Spannungswert die von dem Verstärker (4) ausgegebene Spannung erfaßt wird, wenn dem Verstärker (4) keine Testspannung zugeführt wird, als ein zweiter Spannungswert die von dem Verstärker (4) ausgegebene Spannung erfaßt wird, wenn dem Verstärker (4) die Testspannung zugeführt wird, von dem zweiten Spannungswert ein vorbestimmter Spannungsbetrag subtrahiert wird und der damit erhaltene Spannungswert als Referenzwert verwendet wird, mit dem der erste Spannungswert verglichen wird.

2. Magnetisch-induktives Durchflußmeßgerät nach Anspruch 1, **dadurch gekennzeichnet, daß** eine Warneinrichtung (8) vorgesehen ist, von der ein Warnsignal ausgegeben wird, wenn die von dem Verstärker (4) ausgegebene Spannung von dem Referenzwert um mehr als einen vorbestimmten Betrag abweicht.

3. Magnetisch-induktives Durchflußmeßgerät nach Anspruch 1 oder 2, **dadurch gekennzeichnet, daß** dem Verstärker (4) ein Analog/Digital-Wandler (5) nachgeschaltet ist.

4. Magnetisch-induktives Durchflußmeßgerät nach Anspruch 3, **dadurch gekennzeichnet, daß** für die Testspannungseinrichtung (7) einerseits und den Analog/Digital-Wandler (5) und/oder den Verstärker (4) andererseits voneinander verschiedene und voneinander unabhängige Spannungsquellen (9, 10) vorgesehen sind.

5. Magnetisch-induktives Durchflußmeßgerät nach einem der Ansprüche 1 bis 4, **dadurch gekennzeichnet, daß** der vorbestimmte Spannungsbetrag, der von dem zweiten Spannungswert subtrahiert wird, gerade dem Betrag entspricht, der für das verstärkte Testsignal erwartet wird.

6. Verfahren zum Betreiben eines magnetisch-induktiven Durchflußmeßgeräts, zur Messung des Volumendurchflusses eines durch ein Meßrohr (1) strömenden Mediums, wobei das magnetisch-induktive Durchflußmeßgerät einen Magneten, eine erste Elektrode (2), eine zweite Elektrode (3) und einen Verstärker (4) aufweist, mit dem Magneten ein das Meßrohr (1) durchsetzendes Magnetfeld mit einer senkrecht zur Strömungsrichtung verlaufenden Magnetfeldkomponente erzeugt wird, mit der ersten Elektrode (2) und der zweiten Elektrode (3) eine in dem Medium induzierte Spannung abgegriffen wird und dem Verstärker (4) die mittels der Elektroden (2, 3) abgegriffene Spannung zugeführt wird, eine Testspannung erzeugt und dem Verstärker (4) derart zugeführt wird, daß die Testspannung der mittels der Elektroden (2, 3) abgegriffenen Spannung überlagert werden kann, und die von dem Verstärker (4) ausgegebene Spannung erfaßt und mit einem Referenzwert verglichen wird,
**dadurch gekennzeichnet,**
**daß** die Testspannung während des Meßbetriebs erzeugt und dem Verstärker (4) temporär, vorzugsweise periodisch unterbrochen, zugeführt wird, so daß die Testspannung der mittels der Elektroden (2, 3) abgegriffenen Spannung überlagert wird und als ein erster Spannungswert die von dem Verstärker (4) ausgegebene Spannung erfaßt wird, wenn dem Verstärker (4) keine Testspannung zugeführt wird, als ein zweiter Spannungswert die von dem Verstärker (4) ausgegebene Spannung erfaßt wird, wenn dem Verstärker (4) die Testspannung zugeführt wird, von dem zweiten Spannungswert ein vorbestimmter Spannungsbetrag subtrahiert wird und der damit erhaltene Spannungswert als Referenzwert verwendet wird, mit dem der erste Spannungswert verglichen wird.

7. Verfahren nach Anspruch 6, **dadurch gekennzeichnet, daß** der vorbestimmte Spannungsbetrag, der von dem zweiten Spannungswert subtrahiert wird, gerade dem Betrag entspricht, der für das verstärkte Testsignal erwartet wird.

8. Verfahren nach Anspruch 6 oder 7, **dadurch gekennzeichnet, daß** ein Warnsignal ausgegeben wird, wenn die von dem Verstärker (4) ausgegebene Spannung von dem Referenzwert um mehr als einen vorbestimmten Betrag abweicht.

9. Verfahren nach einem der Ansprüche 6 bis 8, **dadurch gekennzeichnet, daß** die von dem Verstärker (4) ausgegebene Spannung vor dem Vergleich mit dem Referenzwert mittels eines Analog/Digital-Wandlers (5) digitalisiert wird.

10. Verfahren nach Anspruch 9, **dadurch gekennzeichnet, daß** die Testspannung unabhängig von der Versorgungsspannung für den Analog/DigitalWandler (5) und/oder der Versorgungsspannung für den Verstärker (4) erzeugt wird.

## Claims

1. A magnetoinductive flowmeter for measuring the volume flow of a medium traveling through a measuring tube (1), incorporating a magnet for generating a magnetic field that permeates the measuring tube (1) with a magnetic field component perpendicular to the direction of flow, a first electrode (2) and a second electrode (3) serving to collect a voltage induced in the medium, and an amplifier (4) to which the voltage collected by the electrodes (2,3) can be fed, wherein a test voltage source (7) and a comparator (6) are provided, wherein said test voltage source (7) can generate a test voltage, the test voltage source (7) is connected to the amplifier (4) in a manner whereby the test voltage can be fed to the amplifier (4) and superimposed over the voltage collected by the electrodes (2,3), the comparator (6) is connected to the amplifier (4) in a manner whereby the output voltage of the amplifier (4) can be fed to the comparator (6), and the comparator (6) is so designed as to permit a comparison of the output voltage of the amplifier (4) with a reference value
**characterized in**
**that** the flowmeter is designed in such a manner
**that** the test voltage is generated during measurement and is fed to the amplifier (4) temporarily, preferably periodically interrupted, so that when the amplifier (4) is not fed a test voltage, the test voltage of the voltage collected by the electrodes (2, 3) is superimposed and the voltage emitted from the amplifier (4) is measured as a first voltage value, when the amplifier (4) is fed the test voltage, the voltage emitted from the amplifier is measured as a second voltage value, a predefined voltage amount is subtracted from the second voltage value and this obtained voltage value is used as a reference value, with which the first voltage value is compared.

2. The magnetoinductive flowmeter according to claim 1, **characterized in that** an alarm unit (8) is provided that emits a warning signal when the output voltage of the amplifier (4) deviates from the reference value by more than a predefined amount.

3. The magnetoinductive flowmeter according to claim 1 or 2, **characterized in that** an analog/digital converter (5) is connected in line with the amplifier (4),

4. The magnetoinductive flowmeter according to claim 3, **characterized in that** separate, mutually independent power supplies (9, 10) are provided for the test voltage source (7) on the one hand and the analog/digital converter (5) and/or the amplifier (4) on the other hand.

5. The magnetoinductive flowmeter according to any one of claims 1 to 4, **characterized in that** the predefined voltage, which is subtracted from the second voltage value, corresponds precisely to the amount that is expected for the amplified test signal.

6. A method for operating a magnetoinductive flowmeter designed to measure the volume flow of a medium traveling through a measuring tube (1), said magnetoinductive flowmeter incorporating a magnet, a first electrode (2), a second electrode (3) and an amplifier (4), said magnet generating a magnetic field component crossing through the measuring tube (1) and perpendicular to the direction of flow, the first electrode (2) and the second electrode (3) collecting a voltage induced in the medium which is fed to the amplifier (4), wherein a test voltage is generated and fed to the amplifier (4) in a manner whereby said test voltage can be superimposed over the voltage collected by the electrodes (2, 3), and the output voltage of the amplifier (4) is measured and compared with a reference value
**characterized in**
**that** the test voltage is generated during measurement and is fed to the amplifier (4) temporarily, preferably periodically interrupted, so that when the amplifier (4) is not fed a test voltage, the test voltage of the voltage collected by the electrodes (2, 3) is superimposed and the voltage emitted from the amplifier (4) is measured as a first voltage value, when the amplifier (4) is fed the test voltage, the voltage emitted from the amplifier is measured as a second voltage value, a predefined voltage amount is subtracted from the second voltage value and this obtained voltage value is used as a reference value, with which the first voltage value is compared.

7. The method according to claim 6, **characterized in that** the predefined voltage amount that is subtracted from the second voltage value corresponds precisely to the amount that is expected for the amplified test signal.

8. The method according to claim 6 or 7, **characterized in that** a warning signal is emitted when the output voltage of the amplifier (4) deviates from the reference value by more than a redefined amount.

9. The method according to any one of claims 6 to 8, **characterized in that** the output voltage of the amplifier (4) is digitized by means of an analog/digital converter (5) before being compared with the reference value.

10. The method according to claim 9, **characterized in that** the test voltage is generated independent of the supply voltage for the analog/digital converter (5) and/or of the supply voltage for the amplifier (4),

## Revendications

1. Débitmètre magnéto-inductif pour mesurer le débit volumique d'un fluide qui s'écoule à travers un tube de mesure (1), comprenant un aimant pour générer an champ magnétique qui charge le tube de mesure (1) avec une composante de champ magnétique qui s'étend perpendiculairement au sens de l'écoulement, une première électrode (2) et une deuxième électrode (3) pour prélever une tension induite dans le fluide et un amplificateur (4) auquel peut être acheminée la tension prélevée au moyen des électrodes (2, 3), comprenant un dispositif à tension d'essai (7) et un dispositif de comparaison (6), une tension d'essai pouvant être générée par le dispositif à tension d'essai (7), le dispositif à tension d'essai (7) étant relié avec l'amplificateur (4) de telle sorte que la tension d'essai est acheminée à l'amplificateur (4) et peut ainsi être superposée à la tension prélevée au moyen des électrodes (2, 3), le dispositif de comparaison (6) étant relié avec l'amplificateur (4) de telle sorte que la tension délivrée par l'amplificateur (4) peut être acheminée au dispositif de comparaison (6) et le dispositif de comparaison (6) étant configuré de telle sorte qu'il est possible de réaliser une comparaison de la tension délivrée par l'amplificateur (4) avec une valeur de référence,
**caractérisé en ce que** le débitmètre est configuré de telle sorte
que la tension d'essai est générée pendant le mode mesure et acheminée à l'amplificateur (4) temporairement, de préférence avec une interruption périodique, de sorte que la tension d'essai est superposée à la tension prélevée au moyen des électrodes (2, 3), et la tension délivrée par l'amplificateur (4) lorsqu'aucune tension d'essai n'est acheminée à l'amplificateur (4) est détectée en tant que première valeur de tension, la tension délivrée par l'amplificateur (4) lorsque la tension d'essai est acheminée à l'amplificateur (4) est détectée en tant que deuxième valeur de tension, un montant de tension prédéfini est soustrait de la deuxième valeur de tension et la valeur de tension ainsi obtenue est utilisée comme valeur de référence, avec laquelle est comparée la première valeur de tension.

2. Débitmètre magnéto-inductif selon la revendication 1, **caractérisé en ce qu'**il est prévu un dispositif d'alerte (8) qui délivre un signal d'alerte lorsque la tension délivrée par l'amplificateur (4) présente par rapport à la valeur de référence une différence supérieure à un montant donné.

3. Débitmètre magnéto-inductif selon la revendication 1 ou 2, **caractérisé en ce qu'**un convertisseur analogique/numérique (5) est branché à la suite de l'amplificateur (4).

4. Débitmètre magnéto-inductif selon la revendication 3, **caractérisé en ce que** des sources de tension (9, 10) différentes l'une de l'autre et indépendantes l'une de l'autre sont prévues pour le dispositif à tension d'essai (7) d'un côté et le convertisseur analogique/numérique (5) et/ou l'amplificateur (4) de l'autre côté.

5. Débitmètre magnéto-inductif selon l'une des revendications 1 à 4, **caractérisé en ce que** le montant de tension prédéfini, qui est soustrait de la deuxième valeur de tension, correspond exactement au montant qui est attendu pour le signal d'essai amplifié.

6. Procédé d'utilisation d'un débitmètre magnéto-inductif pour mesurer le débit volumique d'un fluide qui s'écoule à travers un tube de mesure (1), le débitmètre magnéto-inductif présentant un aimant, une première électrode (2), une deuxième électrode (3) et un amplificateur (4), l'aimant générant un champ magnétique qui charge le tube de mesure (1) avec une composante de champ magnétique qui s'étend perpendiculairement au sens de l'écoulement, une tension induite dans le fluide étant prélevée avec la première électrode (2) et la deuxième électrode (3) et la tension prélevée au moyen des électrodes (2, 3) étant acheminée à l'amplificateur (4), une tension d'essai étant générée et acheminée à l'amplificateur (4) de telle sorte que la tension d'essai peut être superposée à la tension prélevée au moyen des électrodes (2, 3), et la tension délivrée par l'amplificateur (4) étant détectée et comparée avec une valeur de référence,
**caractérisé en ce**
**que** la tension d'essai est générée pendant le mode mesure et acheminée e à l'amplificateur (4) temporairement, de préférence avec une interruption périodique, de sorte que la tension d'essai est superposée à la tension prélevée au moyen des électrodes (2, 3), et la tension délivrée par l'amplificateur (4) lorsqu'aucune tension d'essai n'est acheminée à l'amplificateur (4) est détectée en tant que première valeur de tension, la tension délivrée par l'amplificateur (4) lorsque la tension d'essai est acheminée à l'amplificateur (4) est détectée en tant que deuxième valeur de tension, un montant de tension prédéfini est soustrait de la deuxième valeur de tension et la valeur de tension ainsi obtenue est utilisée comme valeur de référence, avec laquelle est comparée la première valeur de tension.

7. Procédé selon la revendication 6, **caractérisé en ce que** le montant de tension prédéfini, qui est soustrait de la deuxième valeur de tension, correspond exactement au montant qui est attendu pour le signal d'essai amplifié.

8. Procédé selon la revendication 6 ou 7, **caractérisé en ce qu'**un signal d'alerte est délivré lorsque la tension délivrée par l'amplificateur (4) présente par rapport à la valeur de référence une différence supérieure à un montant donné.

9. Procédé selon l'une des revendications 6 à 8, **caractérisé en ce que** la tension délivrée par l'amplificateur (4) est numérisée au moyen d'un convertisseur analogique/numérique (5) avant la comparaison avec la valeur de référence.

10. Procédé selon la revendication 9, **caractérisé en ce que** la tension d'essai est générée indépendamment de la tension d'alimentation pour le convertisseur analogique/numérique (5) et/ou de la tension d'alimentation pour l'amplificateur (4).
